# EUROPEAN PATENT APPLICATION

(11) **EP 4 190 975 A1**
(43) Date of publication of application: **07.06.2023**
(21) Application number: 21858696.4
(22) Date of filing: 10.08.2021
(51) Int. Cl.: E01F 9/608, E01F 9/696, G08G 1/04, G08G 1/052, G08G 1/123

(54) **METHOD FOR WARNING DRIVERS ABOUT THE PRESENCE OF A PEDESTRIAN ON A PEDESTRIAN CROSSING**

(30) Priority: 20.08.2020 RU 2020127798
(71) Applicant: Kirillov, Aleksandr Viktorovich, Moscow 117447 (RU)
(72) Inventor: KIRILLOV, Viktor Nikolayevich, Tomilino 140070 (RU)
(74) Representative: Ilieva, Angelina Stanimirova
(86) International application number: PCT/RU2021/050255
(87) International publication number: WO 2022/039633

(57) **Abstract**

The invention relates to methods for warning drivers about the presence of pedestrians on a pedestrian crossing. The technical result consists in increasing road safety. The appearance of each pedestrian on a pedestrian crossing is detected using a detector. The information obtained is analyzed using a control device and the position of the pedestrian on the crossing is determined. The information obtained about the location of the pedestrian is then transmitted to two opposite sides of a screen display which is located above the pedestrian crossing assuring the possibility of unobstructed passage of vehicles under it. Furthermore, the actual position of the pedestrian on the road, depicted in the form of a stylized image, is displayed on the screen display in a real time mode. The screen display is placed above the entire width of the road and above areas adjacent to it on both sides.

## Description

The invention relates to methods of warning drivers about the presence of pedestrians on a pedestrian crossing and can be used to reduce the likelihood of vehicles colliding with people, mainly at an unregulated pedestrian crossing.

There is an already known method of alerting drivers to the presence of a pedestrian on a pedestrian crossing, which consists of detecting with a detector the appearance of each pedestrian on the pedestrian crossing, analyzing the received information using a control unit, determining the position of the pedestrian at the pedestrian crossing, transmitting the received information about the location of the pedestrian to the information device to alert the drivers of the approaching vehicles. (EP 3336822A1, publ. 20.06.2018).

The disadvantage of this already known method is the insufficient degree of awareness of the drivers about the possible danger at the pedestrian crossing.

The technical problem is the elimination of the specified drawback.

The technical result is to improve road safety by increasing the degree of awareness of the drivers and pedestrians in the area of pedestrian crossings.

The problem is solved and the technical result is achieved due to the fact that in the method for warning drivers about the presence of a pedestrian at the pedestrian crossing, consisting of detecting, using a detector, the appearance of each pedestrian at the pedestrian crossing, analyzing the received information using a control device, determining the position of the pedestrian at the pedestrian crossing and transmitting the received information about the location of the pedestrian to the information device to alert the drivers of the approaching vehicles, and, according to the invention, a screen display located above the pedestrian crossing is used as an information device, assuring the possibility of unobstructed passage of vehicles under it, while displaying on the screen display the actual position of the pedestrian on the road, depicted in the form of a stylized image, in a real time mode, the screen display is placed over the entire width of the road and over the areas adjacent to it on both sides, and the information on the screen display is displayed on its two opposite sides, informing the drivers of the opposite directions. Information about a pedestrian approaching a pedestrian crossing can be transmitted to the screen display located above the areas adjacent to the road.

At least one grid screen with light elements in the grid nodes can be used as a screen display, and two adjacent grid screens with light elements in the grid nodes can also be used as a screen display, with the grid spacing of one screen exceeding that of the second screen. The light elements of the grid screen with a large grid spacing can be turned on when a pedestrian is detected in the area of pedestrian crossing, thus drawing the attention of drivers to the pedestrian crossing, while the grid screen with a smaller grid spacing displays a stylized image of the pedestrian. The detector can also be used to detect the position of a vehicle approaching a pedestrian crossing and, if a pedestrian is located near the pedestrian crossing, to notify the pedestrian with an audible signal about the approaching vehicle. The speed of approaching vehicle can be determined using the detector and depending on the speed, the intensity of the audible signal can be changed. If there are no pedestrians in the pedestrian crossing area, an auxiliary information can be displayed on the screen display. In addition, it is possible to change the intensity of the light emitted by the screen display depending on the degree of illumination of the area.

The invention is explained by means of drawings.
Figure 1 shows the device with which the claimed method is implement, using two grid screens with different spacing of light elements and a stylized image of the pedestrian displayed on them;
Figure 2 shows a device with a screen on which the moving figure of a pedestrian is displayed.

The device with which the described method is implemented, contains a detector, which may be for example, radar 1, a control unit (CU) 2, a screen display used as an information device 3, located above the area 4 of the pedestrian crossing with the possibility of unobstructed passage of vehicles underneath.

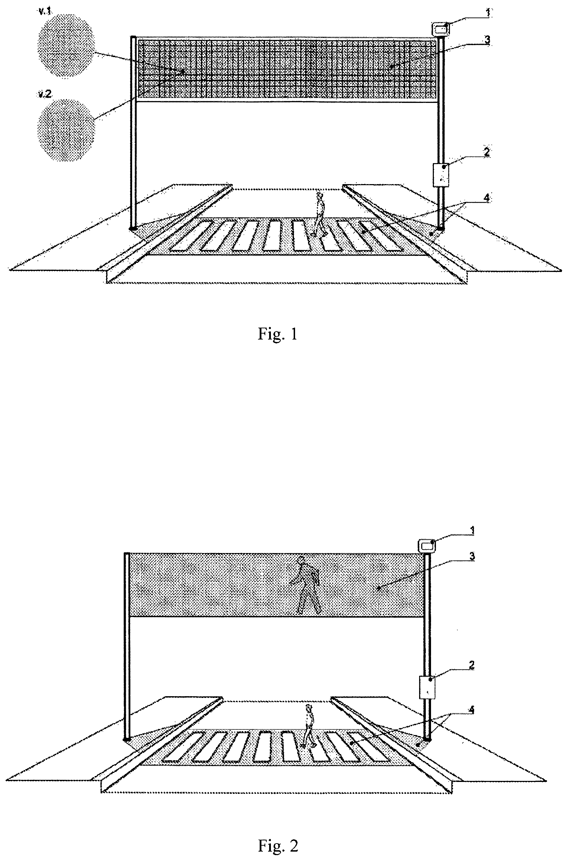

At least one grid screen with light elements in the grid nodes can be used as a screen display, and two adjacent grid screens with light elements in the grid nodes can also be used as a screen display, with the grid spacing of one screen exceeding that of the second screen (see detailed view of v2 in Fig. 1), or the grids are made with equal spacing (see detailed view of v1 in Fig. 1).

The described method is implemented as follows. Signaling the presence of a pedestrian at the pedestrian crossing is carried out by at least one radar 1, mounted on the support, located on the side of the roadway. Radar 1 detects the people located in zone 4 directly at the pedestrian crossing and in close proximity to it (see Fig. 1 and 2), thus helping to alert the drivers in advance, giving them enough time to slow down smoothly.

Radar 1 has the technical ability to send primary information to the CU 2, which is sufficient for the CU 2 to identify a person at a pedestrian crossing with high accuracy, as well as to distinguish the pedestrian from small animals, cars, household waste (e.g., flying in the air plastic bag) and other objects that are not humans and large animals. When a pedestrian is detected in that part of zone 4 (preset during the installation of the devices), which is not a pedestrian crossing, but directly adjacent to it, this fact is identified as a pedestrian's certain intention to cross the road. When this fact is established, a signal is sent to the screen display 3 to turn it on.

The signal received from radar 1 and processed by CU 2, determines not only the presence of pedestrians on the pedestrian crossing and their number, but also the exact location of each pedestrian on the pedestrian crossing at any given time.

After receiving a signal from the radar 1, the CU 2, analyzes this signal, and if it detects one or more people in area 4, sends the appropriate signals to the screen display 3, which notifies drivers with appropriate light signals that one or more pedestrians are on the pedestrian crossing, indicating exactly where they are on the pedestrian crossing at any given time.

Since the radar 1 has the ability to detect and track several hundred objects, as well as to determine their speed, the device can be equipped with the additional option to alert the pedestrian, with an audible signal from an appropriate additional sound device, about an approaching vehicle, for example, moving with excessive speed.

In the case of the appearance of objects that are not pedestrians in the zone 4, the CU 2 is able to distinguish them from a person and do not send a signal to the screen display 3 in the absence of such a need. This eliminates sending false warnings for the drivers about the presence of pedestrians.

The screen display 3, which receives signals from the CU 2 and serves to alert drivers to the presence of people in the area, can be made in different versions. Many of such versions are possible, but each of them must contain the possibility to notify the driver about the exact location of one or more pedestrians at the pedestrian crossing. Depending on the cost of the screen display 3, this may be a silhouette of a moving person or a vertical rectangle of alarming color on the luminous background of the switched on screen display 3. This silhouette or rectangle is generated by sequentially turning on/off the corresponding color elements of the screen display 3 located directly above each pedestrian at the pedestrian crossing.

Each version involves the installation of at least one screen display 3, located directly above the pedestrian crossing on supports on both sides of the road, at a height that allows unobstructed movement of any vehicle under it. In cases where separate notification of drivers of passing and oncoming traffic directions is provided, it is possible to install a number of additional screen displays 3 nearby.

The first version involves the installation of two supports on both sides of the roadway and the tension of metal cables between them.

On these cables, located at the top and bottom, two monochrome (single color) LED or similar grids like New Year's stretching garlands are stretched and fastened side by side, in which the light elements are located in the nodes of the grid. These grids, whose glow must be sufficient to be seen by the driver, are placed nearby. They notify the drivers of both directions of movement simultaneously about the presence of a pedestrian at the pedestrian crossing.

One of these grids may have a sufficiently large distance between the light elements (see Fig. 1, version 2) and not be programmed, but turn on as a whole when a signal is received from the CU 2 about the presence of a pedestrian at the pedestrian crossing. That is, when a pedestrian is detected in zone 4, all light elements of the abovementioned grid are turned on simultaneously. They light up simultaneously (e.g. with a pulsating yellow light to better attract the driver's attention) as long as at least one person is in the area.

A second LED or similar grid can have a smaller spacing between the light elements (see Fig. 1, version 2), for more details on the information presented.

It is programmable, controlled by the CU 2, and each 5 of its separate elements turns on when there is a pedestrian under it, signaling to the driver that the pedestrian is located at that particular place on the pedestrian crossing.

In the cheapest version, on a second LED or similar grid, the light elements form red light vertical rectangles directly above those specific crossing locations where pedestrians are located at any given time, and follow their movements along the pedestrian crossing.

If the pedestrian is located in zone 4, the pedestrian's intention to use the pedestrian crossing is not in doubt for CU2, but the pedestrian has not yet entered the pedestrian crossing, the red light vertical rectangles are turned on in the area of the light grid that is above the sidewalk on the pedestrian's side. This is done in order to transmit in advance the information to the driver about the location of the pedestrian in the pedestrian crossing area and the pedestrian's presumed intention to enter the pedestrian crossing. The second version involves the location of two separate screen displays 3 between the supports, each of which transmits information only to drivers of vehicles moving in one direction. Each screen display 3 is of higher quality, able to display any complex multicolored moving picture. This is no longer a New Year's stretching garland, but actually a monitor or TV.

When a pedestrian is detected at or near a pedestrian crossing, the entire surface of both screen displays 3 lights up in yellow, except for those areas that are directly above the pedestrian.

The light grid areas located directly above the pedestrians' location display moving pictures that imitate moving pedestrian silhouettes, including the stylized arm and leg movements, in order to most clearly alert the driver to the presence of one or more pedestrians at the pedestrian crossing (see Fig. 2).

If the pedestrian is located in zone 4, the pedestrian's intention to use the pedestrian crossing is not in doubt for CU2, but the pedestrian has not yet entered the pedestrian crossing, moving pictures that imitate moving pedestrian silhouettes are displayed in that part of the screen display 3 which is located above the sidewalk on the pedestrian's side. This is done in order to transmit in advance the information to the driver about the location of the pedestrian in the pedestrian crossing area and the pedestrian's presumed intention to enter the pedestrian crossing.

Since the screen display 3 in the second version allows displaying almost any picture, the CU 2 can be configured in such a way that, in addition to the moving silhouette of a person, any other additional information to be displayed on the screen display 3, which makes it possible to better inform the driver about the situation at the pedestrian crossing (for example, the speed of approaching vehicle, if it is exceeded).

In the case of version 2, the screen display 3 can be used to display any other information, in particular videos clips with social or commercial information during those periods when there are no pedestrians at the pedestrian crossing.

In this case, when a pedestrian appears on the pedestrian crossing or in close proximity to it, the playback of the specified "other" information is temporarily suspended, the screen display 3 switches to the main operating mode, that is, it serves to alert drivers to the presence of pedestrians at the pedestrian crossing. Immediately after the pedestrian has finished crossing the pedestrian crossing, the screen display 3 switches back to the "other" information playback mode until it becomes necessary to function according to its intended purpose.

Displaying commercial information at times when there are no pedestrians in the pedestrian crossing may allow, by reproducing it, more good quality screen displays 3 (version 2) to be installed to better inform drivers and to improve pedestrian safety.

Since different degrees of illumination of the screen display 3 are needed during the day and at night in order to inform drivers in the best way, it is possible to provide for regulation of the light intensity of the transmitted signal depending on the illumination of the pedestrian crossing. For this purpose, a light sensor can be connected to the control unit, based on the data of which the intensity of illumination of the screen display 3 will be adjusted.

Application of the described method will be most useful in the dark hours, as well as in the presence of "blind spots" in some lanes of traffic, in the presence of several lanes in one direction. For example, if the view of the driver and pedestrian in the "blind" lane is obstructed by a vehicle that has stopped to let this pedestrian to pass.

The method copes with the task equally well regardless of the season, time of the day or weather conditions.

Thus, the use of the claimed method provides improved road safety by increasing the degree of awareness of the drivers and pedestrians in the area of pedestrian crossings.

## Claims

1. A method for warning drivers about the presence of a pedestrian at a pedestrian crossing, which consists of detecting using a detector the appearance of each pedestrian at the pedestrian crossing, analyzing the received information using a control device, determining the position of the pedestrian at the pedestrian crossing and transmitting the received information about the location of the pedestrian to the information device to alert the drivers of the approaching vehicles, **characterized by** the fact that a screen display located above the pedestrian crossing is used as an information device, assuring the possibility of unobstructed passage of vehicles under it, while displaying on the screen display the actual position of the pedestrian on the road, depicted in the form of a stylized image, in a real time mode, the screen display is placed over the entire width of the road and over the areas adjacent to it on both sides, and the information on the screen display is displayed on its two opposite sides, informing the drivers of the opposite directions.

2. The method according to cl.1 is **characterized by** the fact that the information about a pedestrian approaching a pedestrian crossing can be transmitted to a screen display located above the areas adjacent to the road.

3. The method according to cl.1 is **characterized by** the fact that at least one grid screen with light elements in the grid nodes can be used as a screen display.

4. The method according to cl.1 is **characterized by** the fact that two adjacent grid screens with light elements in the grid nodes with the grid spacing of one screen exceeding that of the second screen can be used as a screen display.

5. The method according to cl.4 is **characterized by** the fact that the light elements of the grid screen with a large grid spacing turn on when a pedestrian is detected in the area of pedestrian crossing, thus drawing the attention of drivers to the pedestrian crossing, while the grid screen with a smaller grid spacing displays a stylized image of the pedestrian.

6. The method according to cl.1 is **characterized by** the fact that the detector can also be used to detect the position of a vehicle approaching a pedestrian crossing and, if a pedestrian is located near the pedestrian crossing, to notify the pedestrian with an audible signal about the approaching vehicle.

7. The method according to cl.1 is **characterized by** the fact that the speed of approaching vehicle is determined using the detector and depending on the speed, the intensity of the audible signal is changed

8. The method according to cl.1 is **characterized by** the fact that if there are no pedestrians in the pedestrian crossing area, an auxiliary information is displayed on the screen display

9. The method according to cl.1 is **characterized by** the fact that the intensity of light emitted by the screen display is changed depending on the degree of illumination of the area.
